# EUROPEAN PATENT APPLICATION

(11) **EP 1 318 087 A1**
(43) Date of publication of application: **11.06.2003**
(21) Application number: 01129059.0
(22) Date of filing: 07.12.2001
(51) Int. Cl.: B65G 47/52, B65G 21/14

(54) **Transfer conveyor**

(71) Applicant: Delfin s.r.l., 36034 MALO, (Vicenza) (IT)
(72) Inventor: Marchioro, Gianpietro, 36030 MOnte Di Malo(Vicenza) (IT)
(74) Representative: Bettello, Pietro, Dott. Ing.

(57) **Abstract**

Product handling unit to be combined with a stepping block conveyor belt.

Said unit is characterised in that it is arranged immediatly downstream of the conveyor belt (2) and it comprises an additional small conveyor belt (5) of the closed ring type, which, besides being engaged to slide continuously and always in the same direction, changes its profile so as to alternatively draw closer/space its end from the main block conveyor belt (2), in relation with the periodical presence/absence of the same blocks (3).

## Description

The present invention relates to a product handling unit to be combined with a stepping block conveyor belt.

Conveyor belts provided with protruding blocks, intended to push and align the products laid on the same belt, are currently used, in particular in horizontal packaging machines.

When such a type of conveyor belt is used, the optional support surface arranged immediately downstream of the belt and suitable for receiving the product discharged by it must exhibit an inlet at the contact portion with the same belt for allowing the passage of the blocks.

However, such an inlet causes disadvantages when the products to be handled are loose and/or small-sized, since the same may slip into said inlet and impair the regular operation of the machine.

The purpose of the present finding is that of realising a unit for handling the product discharged from the block conveyor belt which should eliminate such a disadvantage, allowing the handling of loose, small-sized products.

Constructively, the handling unit of the finding consists of an additional small conveyor belt of the closed ring type which, besides being engaged to slide in continuous and always in the same direction, changes its profile so as to alternatively draw closer/space its end from the main block conveyor belt, in relation with the periodical presence/absence of the same blocks.

This is obtained, according to the finding, by providing for the coupling forming the additional conveyor belt to be maintained in tension and to be engaged to slide on at least three keyed rollers on the fixed shoulders of the handling unit and on two more transmission rollers, arranged on the side of the main block conveyor belt, which are mounted on a small trolley that moves with a reciprocating rectilinear movement.

With such a solution, the additional moving belt first approaches the main belt so that the product, pushed by the small block, passes from the one belt to the other.

Afterwards, when the small block starts winding on the transmission roller of the main belt, the mobile trolley draws back so that the front transmission roller of the additional belt moves away from the above main belt to allow the passage of the same block.

Afterwards, while the product continues its movement on the main belt, the mobile trolley returns forward, carrying the front transmission roller and thus, the same roller adjacent the main conveyor belt, waiting for a new product to be handled.

Advantageously, during the product passage step from the main belt to the additional belt, the advancement speed of such a second belt is slightly higher than the advancement speed of the main belt, so that the product, being subject to acceleration, moves away more quickly, so as to prevent the interference with the protruding block during the winding step of the latter on the driving roller.

These and other features of the finding will appear more clearly from the description of a possible embodiment, made by way of an illustrative and non-limiting example, with reference to the attached drawings. In such drawings:

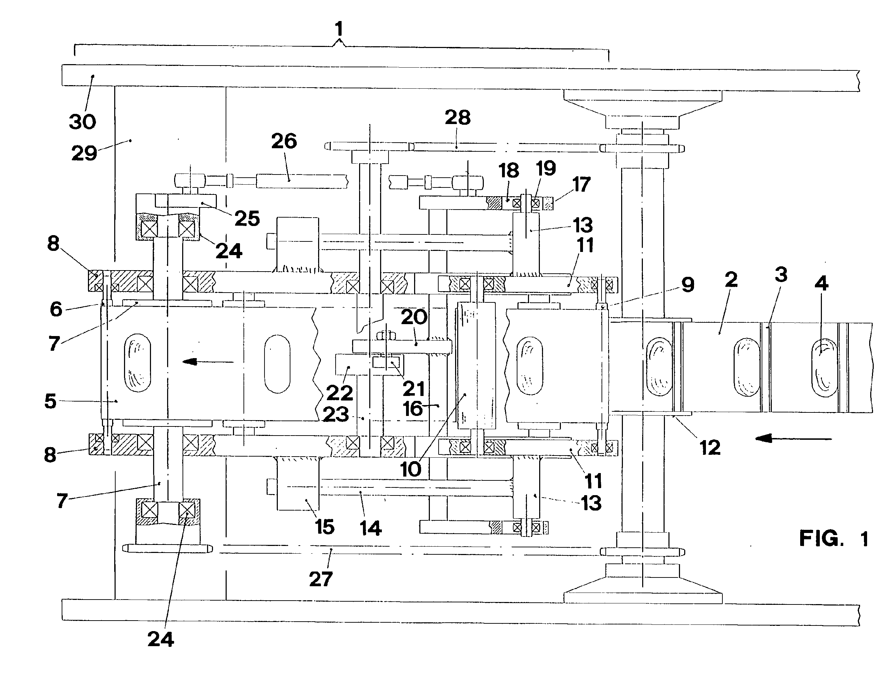

- Figure 1 (Table I) shows a plan view of the handling unit of the finding;
- Figure 2 (Table II) shows a front elevation view of the device of the finding in a first working position (mobile trolley forward);
- Figure 3 (Table III) shows a front elevation view of the device of the finding, in a second working position (mobile trolley withdrawn).

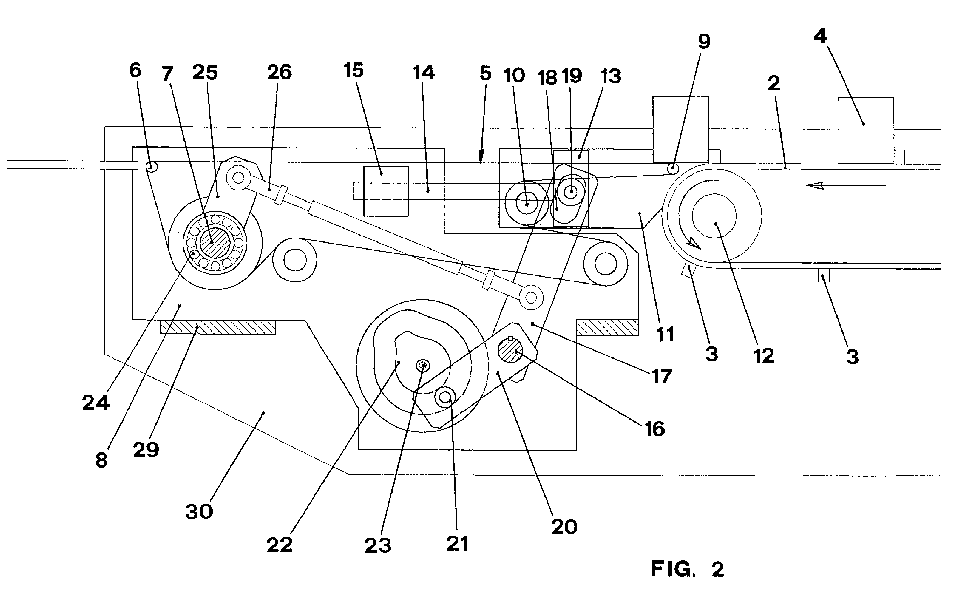

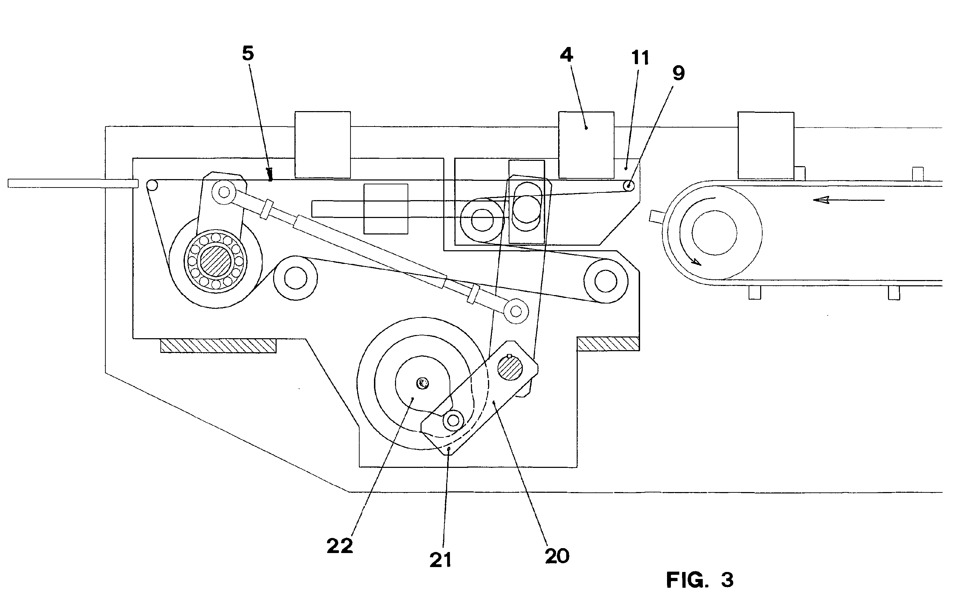

As it can be seen in the figures, the handling unit of the finding, arranged immediately downstream of a conveyor belt 2 provided with small stepping blocks 3 pushing products 4 to be handled, comprises a small, closed-ring belt 5 wound, on the outermost side on the end roller 6, on the driving roller 7 and on other transmission rollers, all keyed on the fixed side shoulders 8 and, respectively, wound on the innermost side on the end roller '9 and on the transmission roller 10, the latter keyed, on the other hand, on the shoulders 11 of a mobile trolley provided with a reciprocating rectilinear movement suitable for moving the end of the small belt 5 from a position adjacent to the main belt 2 (reference shall be made to figure 2) to a withdrawn position (reference shall be made to figure 3), in order to allow the passage of small blocks 3 when the portion of the conveyor belt 2 winds on its motor-driven roller 12 and, vice versa, the return of said small belt when the above small block is not present anymore.

The two mobile shoulders 11 are supported and held in guide by the side plates 13, integral with them, provided with pins 14 sliding into support blocks 15, welded to the fixed shoulders 8.

The reciprocating rectilinear movement of the entire mobile trolley that changes the profile of the coupling of small belt 5 is realised through an equaliser consisting of a transversal shaft 16, idly supported on the fixed shoulders 8, provided on the sides with two lever arms 17 engaging, through slits 18, with bearings 19 keyed on the side plates 13 of the mobile shoulders 11.

The angular rotation of the transversal shaft 16, which acts as a fulcrum for the equaliser, occurs through a further lever arm 20 provided with a wheel 21, engaged to follow the profile of a blind cam 22, keyed on a motor-driven shaft 23, idly supported on the fixed shoulders 8.

Finally, in order to increase the advancement speed of the small belt 5 during the return step of the mobile trolley, and thus to make the passage of product 4 from the one belt to the other quicker, it is foreseen that on the driving shaft 7, which moves belt 5, there are keyed two unidirectional bearings 24, of the free wheel type, with the application of a lever arm 25, on which one end of a tie rod 26 is pivoted, being foreseen at one end of said shaft, whereas the other end of said rod is pivoted on the lever arm 17 which moves the mobile trolley.

In this way, as it can be seen looking at figures 2 and 3, when the mobile trolley withdraws the crank gear connected to tie rod 26, it actuates the unidirectional bearing 24, which thus makes the speed of belt 5 increase.

Vice versa, when the mobile trolley returns backward or protruding, the unidirectional bearing 24 remains inactive, so the small belt 5 continues at the normal speed imparted by the driving roller 7.

The movement of the entire handling unit 1 is obtained directly by the motor-driven driving roller 12 of the conveyor belt 2 respectively through the kinematic chain 27, which puts the driving roller 7 into rotation, and the kinematic chain 28, which puts the cam-holder shaft 23 into rotation.

The entire handling unit 1 is supported by cross members 29 anchored to shoulders 30, supporting the conveyor belt 2.

The above description clearly shows that the handling unit of the finding can also be combined with fixed conveyors provided with pushers and, being totally independent, it can be mounted on horizontal packaging machines normally on the market.

## Claims

1. PRODUCT HANDLING UNIT, to be preferably combined with a stepping block conveyor belt, said unit being **characterised in that** it is arranged immediately downstream of the conveyor belt for receiving the products discharged by said belt, and **in that** it comprises an additional small conveyor belt of the closed-ring type which, besides being engaged to slide continuously and always in the same direction, changes its profile so as to alternatively draw closer/space its end from the main block conveyor belt, in relation with the periodical presence/absence of the same blocks.

2. PRODUCT HANDLING UNIT, according to claim 1, **characterised in that** the coupling forming the additional small conveyor belt is maintained in tension and is engaged to slide between at least three rollers keyed on the fixed shoulders of the handling unit, and of two more transmission rollers, arranged on the side of the main block conveyor belt, which are mounted on a trolley moving with a reciprocating rectilinear movement so that the above additional moving small belt first approaches the main belt so that the product, pushed by the small block, passes from the one belt to the other, and then when the block starts winding on the transmission roller of the main belt, said mobile trolley being subject to draw back so that the front transmission roller of the additional belt moves away from the main belt to allow the passage of the same block and afterwards, when the product has fully laid on the additional belt and advances with said belt, the mobile trolley reverses its stroke and returns forward, thus returning the front transmission roller and the same belt to the position adjacent the main conveyor belt, waiting for a new product to be handled.

3. PRODUCT HANDLING UNIT, according to claim 2,
**characterised in that**, during the passage step of the product from the main belt to the additional belt, the advancement speed of said second belt is slightly higher than the advancement speed of the main belt, so that the product, being subject to acceleration, moves away more quickly, so as to prevent the interference with the protruding block during the winding step of the latter on the driving roller.

4. PRODUCT HANDLING UNIT, according to claim 1, arranged immediately downstream of a conveyor belt (2), provided with small blocks (3) pushing the products (4) to be handled, **characterised in that** it comprises a small closed-ring belt (5) wound, on the outermost side, on the end roller (6), on the driving roller (7) and on other transmission rollers, all keyed on the side fixed shoulders (8) and respectively wound on the innermost side on the end roller (9) and on the transmission roller (10), the latter keyed, on the other hand, on the shoulders (11) of a mobile trolley provided with a reciprocating rectilinear movement suitable for moving the end of the belt (5) from a position adjacent to the main belt (2) to a withdrawn position, in order to allow the passage of the small blocks (3) when the portion of the conveyor belt (2) winds on the motor-driven roller (12) and vice versa, the return of said belt when the above small blocks are not present anymore.

5. PRODUCT HANDLING UNIT, according to claim 4, **characterised in that** the two mobile shoulders (11) are supported and held in guide by side plates (13), integral with them, provided with pins (14) sliding into support blocks (15), welded to the fixed shoulders (8).

6. PRODUCT HANDLING UNIT, according to claim 3,
**characterised in that** the reciprocating rectilinear movement of the entire mobile trolley, that changes the profile of the coupling of the belt (5) is realised through an equaliser consisting of a transversal shaft (16), idly supported on the fixed shoulders (8), provided on the sides with two lever arms (17) engaging, through slits (18), with bearings (19) keyed on the side plates (13) of the mobile shoulders (11).

7. PRODUCT HANDLING UNIT, according to claim 6, **characterised in that** the angular rotation of the transversal shaft (16), which acts as a fulcrum for the equaliser, occurs through a further lever arm (20) provided with a wheel (21), engaged to follow the profile of a blind cam (22), keyed on a motor-driven shaft (23), idly supported on the fixed shoulders (8).

8. PRODUCT HANDLING UNIT, according to claims 3 and 4, **characterised in that** on the driving shaft (7) moving the small belt (5) there are keyed two unidirectional bearings (24), of the free wheel type, with the application of a lever arm (25), on which one end of a tie rod (26) is pivoted, being foreseen, whereas the other end of said rod is pivoted on the lever arm (17) moving the mobile trolley.

9. PRODUCT HANDLING UNIT, according to claim 4, **characterised in that** the movement of the entire handling unit (1) is obtained directly by the motor-driven driving roller (12) of the conveyor belt (2) respectively through the kinematic chain (27), which puts the driving roller (7) into rotation, and the kinematic chain (28), which puts the cam-holder shaft (23) into rotation.

10. PRODUCT HANDLING UNIT, according to claim 4, **characterised in that** the entire handling unit (1) is supported by cross members (29) anchored to shoulders (30), supporting the conveyor belt (2).

11. PRODUCT HANDLING UNIT, according to one or more of the previous claims, **characterised in that** it can also be combined with fixed conveyors provided with pushers.

12. PRODUCT HANDLING UNIT, according to one or more of the previous claims, **characterised in that** it is totally independent of the packaging machine.
